Europäisches Patentamt

European Patent Office

Office européen des brevets

(19)

(11) Publication number: **0 119 772**
**A2**

---

(12) # EUROPEAN PATENT APPLICATION

(21) Application number: **84301268.3**

(22) Date of filing: **27.02.84**

(51) Int. Cl.³: **G 01 N 27/00**

---

(30) Priority: **17.03.83 GB 8307410**

(43) Date of publication of application: **26.09.84**
**Bulletin 84/39**

(84) Designated Contracting States: **CH DE FR LI NL**

(71) Applicant: **Secretary of State for Social Services in Her Britannic Majesty's Government of the United Kingdom of Great Britain and, Northern Ireland Alexander Fleming House Elephant & Castle, London SE1 6BY (GB)**

(72) Inventor: **Thornley, John Kevin, 10 Sandringham Rise, Shepshed Leicestershire LE12 9ND (GB)**

(74) Representative: **Beckham, Robert William et al, Procurement Executive Ministry of Defence Patents 1A(4), Room 2014, Empress State Building Lillie Road London SW6 1TR (GB)**

---

(54) Improvements in or relating to determining the presence of a contaminant in a gaseous carrier.

(57) The invention is directed more especially to the monitoring of any fine particulate content of medical gases, eg those distributed through pipe lines. Fine dust particles, in a fairly well defined size range, are harmful if inhaled, especially by a sick person. To avoid the hazard, gas supplies, eg of oxygen, must be monitored for such dust. The invention provides that a stream of gas deposits any particles carried by it on a first crystal oscillator (12) the frequency of which is thereby varied. Frequency change is measured by beating the frequency of said crystal with that of a second similar crystal (14) not exposed to the gas stream. Cleaning of the first crystal (12) after each test is avoided by a preliminary comparison (48 – 50) of the frequency of the first crystal (12) with a predetermined value, to show whether the crystal frequency has departed from the linear portion of its mass/frequency characteristic. Provided the first crystal (12) continues to operate in said linear portion, repeated tests may be carried out without need for cleaning.

ACTORUM AG

1

0119772

This invention relates to apparatus and method for determining the presence of a contaminant in a gaseous carrier, and relates especially, although not exclusively, to the detection of particulate contaminant in supplies, more particularly piped supplies, of gases for medical use, for example oxygen and nitrous oxide.

It is necessary to be able to monitor the presence in medical gases of contaminant particles more especially in the size range from about 1 to 10 micrometre, on account of their effects on the human respiratory system. Smaller particles give rise to little harm, while larger ones can be fairly readily eliminated by the use of filters which do not give rise to excessive restriction on flow rates. Apparatus has previously been devised which makes use of the fact that action of contaminant on a crystal oscillator changes the mass of the crystal and hence its frequency of oscillation. Two crystals have been used, one to be exposed to contaminant, the other not exposed to contaminant, but otherwise having the same environmental conditions as the one first mentioned. The frequency of the oscillators is compared before and after the exposure of the one crystal to contaminant, and a change in the difference between the frequencies is a measure of the amount of contaminant picked up by the exposed crystal. Such techniques have been described in US Patent Specification No 3561253. However, the use of such techniques has normally involved the use of skilled personnel and the necessity for cleaning the surface of the crystal between successive measurements, which is a task requiring time and care, and hence is expensive.

The present invention provides apparatus and method whereby the above mentioned disadvantages are to a great extent mitigated.

According to the invention, apparatus for detecting the presence of a contaminant in a gaseous carrier comprises a first piezo electric cystal oscillator; carrier gas feed means enabling contaminant in said gas to act upon said first crystal to change the effective mass thereof; a second piezo electric oscillator arranged so that the second crystal is exposed to substantially the same environmental conditions affecting its stability as said first crystal, except that shielding means are provided so that the second crystal is not exposed to contaminant; beat detecting means to detect a beat frequency between the first frequency of the first oscillator and the second frequency of the second oscillator; timing and switching means arranged to transmit

first and second values proportional to the beat frequency to comparator means to compare said values respectively with first and second predetermined values, whereby comparison between said first values indicates whether the said first crystal is initially operating within the linear portion of its mass/frequency characteristic, and comparison between said second values indicates any change in mass of said first crystal due to action thereon of contaminant.

Preferably the timing and switching means is arranged to give a signal, after transmission of said first value, to commence feed of carrier gas through said carrier gas feed means, and after a predetermined time interval, and before transmission of said second value, a signal to stop feed of carrier gas through said carrier gas feed means. Said signals to commence and to stop feed of carrier gas may be audible and/or visible signals, or may be arranged to operate a valve automatically.

The predetermined time interval may be arranged to be dependant on the pressure of the said carrier gas, and the apparatus may be arranged so that the time period is selectable manually in relation to said pressure.

Desirably the apparatus includes a frequency to voltage converting means to produce an output voltage value proportional to the beat frequency output of said beat detecting means.

The invention extends to a method of detecting the presence of a contaminant in a gaseous carrier which includes the steps of allowing oscillations from a first crystal oscillator to produce a beat frequency with oscillations from a second crystal oscillator exposed to substantially the same enviornmental conditions affecting its stability as said first crystal, except that said second crystal oscillator is not exposed to contaminant; comparing a first value proportional to said beat frequency with a first predetermined value to determine whether the first crystal oscillator is initially operating within the linear portion of its mass/frequency characteristic; feeding carrier gas to said crystals so that any contaminant in said gas can act upon said first crystal oscillator to change the effective mass thereof; and comparing a second value proportional to the beat frequency between said oscillators with a second predetermined value to indicate any change in mass of said first crystal oscillator due to action thereon of contaminant.

The invention will be further described, by way of example only, with reference to the accompanying drawings in which 0119772

Fig 1 illustrates gas feed means in the form of a chamber in which a crystal oscillator is exposed to a flow of carrier gas

Fig 2 is a block diagram of the electrical circuits of the apparatus.

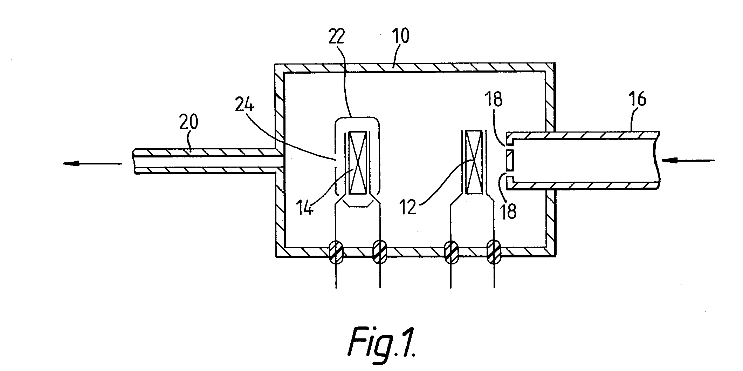

Referring to Fig 1, a chamber 10 has arranged in it two piezo electric crystal oscillators 12, 14, the chamber being part of a carrier gas feed means. Each crystal is an AT cut quartz crystal having attached electrodes (not separately referenced) which are adapted, together with an oscillatory electrical circuit, to make each crystal oscillate in a thickness shear mode at a frequency of 5MHz. The carrier gas feed means further comprises an inlet pipe 16 for gas to be tested for content of contaminant. The end of pipe 16, inside chamber 10, is provided with a plurality of nozzles 18, eg five in number, each 1mm in diameter. The carrier gas feed means further comprises an exit nozzle 20, formed so that sonic flow through it occurs for gas pressures higher than about 0.25 MNm$^{-2}$. Gas line pressures are commonly at about 0.4 or 0.67 MNm$^{-2}$. The volume rate of flow through the chamber 10 is then constant for a given gas line pressure. When carrier gas flows through nozzles 18, any particulate contaminant it carries, in the size range from about 1 to 10 micro metre, is impacted out the near face of crystal 12, about 0.5mm from the nozzle 18, and is retained on that face. This increases the mass of the crystal 12 and causes its natural frequency of vibration to be reduced.

The second crystal 14, also arranged in the chamber 10, is exposed to substantially the same environmental conditions of temperature, pressure and humidity as the first crystal 12. However the second crystal 14 is provided with shielding means 22, vented at 24, which prevents any contaminant from being deposited on it. Consequently the mass of crystal 14 does not change as a result of particulate contaminant in carrier gas passing through the chamber 10.

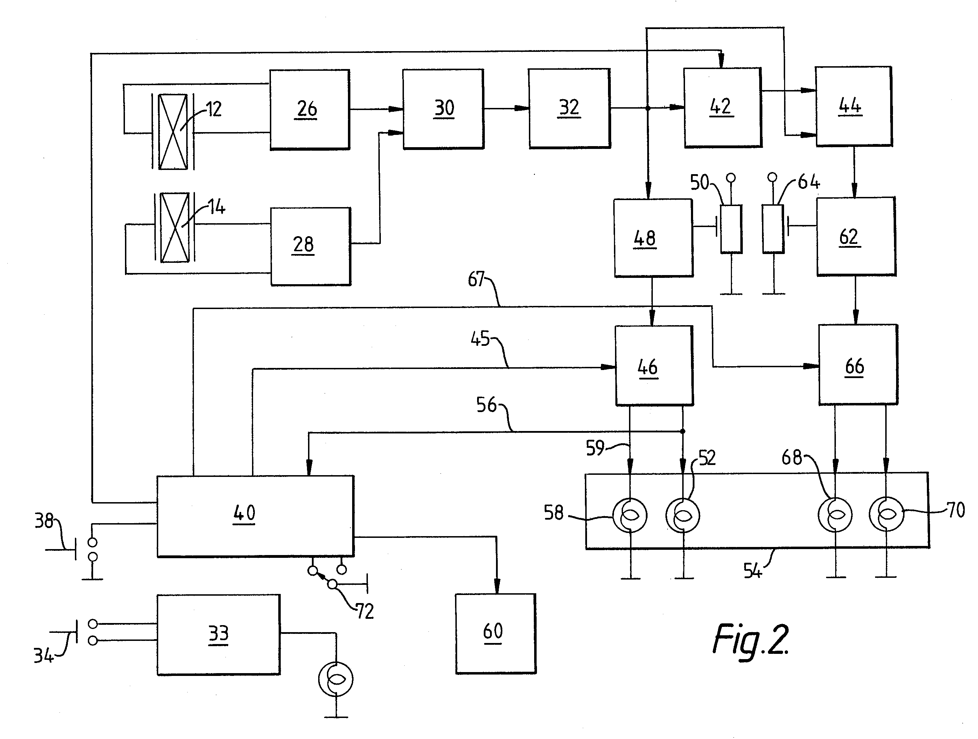

Referring to Fig 2 the first crystal oscillator 12 is an element of an electrical oscillator circuit 26, and the second crystal 14 is likewise part of an oscillator circuit 28. Outputs, one from each of oscillator circuits 26 and 28, are taken to beat detecting means 30. The function of the beat detecting means is to allow the said outputs from 26 and 28 to interact to produce a beat frequency dependent on any frequency difference between the two oscillator circuits. The beat frequency output of 30 is filtered to remove high frequencies,

and is fed to a frequency-to-voltage converting means 32, to provide an output voltage value proportional to the beat frequency output of 30. The crystal oscillators 12 and 14 are arranged initially, that is before the apparatus is used for testing any gas supply, to be substantially identical, so that any difference between their respective natural frequencies of oscillation is initially small. Preferably the crystals are selected so that the frequency of crystal 12 is lower than that of crystal 14. The effect on frequency of increasing mass of a crystal oscillator can be predetermined. In the particular embodiment described, a change in frequency of 1 Hz represents a change in mass of about 0.003 microgram. The crystal is about 15mm in diameter, and in use, carrier gas, and any contaminant, impinges on it normal to a circular face thereof. The initial frequency of oscillation is 5 MHz, and is gradually decreased in use as contaminant collects on the crystal. Care must be exercised to ensure that so much contaminant does not accumulate that the crystal departs from operation in the linear portion of its mass/frequency characteristic. Typically, the departure from linearity which can be tolerated is represented by a change in resonant frequency of the order of 2 KHz in 5 MHz.

In order to use the apparatus, connection is first made to the supply of carrier gas to the tested, through suitable valve means (not illustrated) which permit the starting and stopping of flow of gas through the chamber 10. The apparatus is preferably made self-contained by using a battery 33 as its power supply. To avoid complication, no leads from the battery to other parts of the apparatus have been shown. The battery is first tested by operation of a battery test switch 34 so that the state of the battery is revealed by an indicating device 36. If the battery is in a satisfactory condition, the start switch 38 is operated and enables the timing and switching means referenced 40.

It is desirable that the timing and switching means should first energise the oscillator circuits 26, 28 for an idle period, of the order of two seconds, to allow the crystal oscillators to settle down to a stable mode of oscillation. The second stage is for the timing and switching means 40 to sample the beat frequency produced between the outputs of the oscillators, and the sampled frequency to be converted to a voltage value in the converting means 32. This beat frequency, and related voltage value, (a first voltage value) relates to any change in mass of crystal oscillator 12 which may have taken place due to previous use of the apparatus. The timing and switching means 40 resets a sample-and-hold circuit 42. The sample-and-hold circuit then accepts and holds the first voltage value from the convertor 32; the output of the differential amplifier 44 is then zero. The timing and switching means interrogates through leads 45 and a flip-flop circuit 46, a window comparator 48 to determine whether the voltage value from convertor 32 is too high or too low. If the voltage value (and hence the beat frequency) is too high in relation to a preset value 50 fed to the comparator 48, the implication is that the crystal oscillator 12 is already over-contaminated and is operating outside the linear part of its mass/frequency characteristic. In this case a lamp 52 in a display panel 54 is illuminated, and a signal is transmitted to the timing and switching means 40, through leads 56, which prevents further operation of the apparatus to carry out a test on a gas supply. Before a test can be made, the crystal oscillator 12 must be cleaned or substituted by a new one. If the voltage value is too low, this may indicate damage to a crystal; in which case again the warning lamp 52 is illuminated. Illumination of lamp 58, through leads 59, indicates that the crystal is usable, and the test can proceed.

Provided the sampled voltage value is inside the limits set on comparator 48, the timing and switching means 40 proceeds to a third stage. An audible warning 60 is energised when gas is passed through the chamber 10. The timing and switching means allows a period of time to elapse before the audible warning 60 ceases, indicating that the flow of carrier gas must be stopped. During that period the crystal oscillator 12 is exposed to carrier gas, and its mass is changed in accordance with the amount of contaminant picked up from said gas. Any such increase in mass causes a reduction or a further reduction in resonant frequency, and the output of a second voltage value from the convertor 32 is increased.

After the        audible warning the timing and switching means 40 proceeds to a fourth stage in which the second voltage value, corresponding to the conditions at the termination of gas flow, and the first voltage value (the latter from the sample and hold circuit 42) are applied to the respective inputs of the differential amplifier 44. The output of amplifier 44 is then an indication of any change in mass of the first crystal oscillator 12 due to action thereon of contaminant during the foregoing exposure to carrier gas. The output of the amplifier 44 is fed to a level comparator 62 in which it is compared with a preset value 64 representing the maximum change in resonant frequency of the crystal oscillator 12 during test corresponding to an acceptable concentration of contaminant in the carrier gas tested. The output of the comparator 62 is fed to a flip-flop circuit 66, which, on interrogation by the timing and switching means 40, through leads 67, actuates the lighting of one or other of lamps 68 and 70. If the preset value 64 has not been exceeded, the green lamp 68 is illuminated, indicating that the gas is safe, ie has a low enough content of contaminant. If, on the other hand, the value 64 has been exceeded, the red lamp 70 is illuminated, indicating that the gas is unsafe.

In order to obtain a reliable indication of any contaminant content of a carrier gas supply under test it is necessary to take account of the gas supply pressure. Common gas pressures for supplies of medical gases are 60 or 100 pounds per square inch (about 0.4 or about 0.67 $MNm^{-2}$). In the embodiment described, the timing and switching means 40 is provided with a manually operable switch 72, having two positions. One position adjusts the timing and switching means to indicate a suitable exposure of the crystal 12 to carrier gas; the exposure being indicated, as already described, by the audible warning 60. The exposure time appropriate for the higher pressure mentioned may be of the order of one minute. For the other position of the switch 72 the indicated exposure time is longer, about one and a half minute, appropriate to the lower gas pressure. The timing and switching means 40 can be arranged to provide for further different periods of exposure to carrier gas if additional pressures are to be catered for; in which case the switch 72 will be of multi-position kind.

With the use of relay means, the switching means 40 may be arranged to actuate a solenoid-operated or motorised valve (not shown) in series with the carrier gas supply, to open the valve at the commencement and close it at the end of the above mentioned exposure time. The actuation of the solenoid operated valve may, if required, still be accompanied by the sounding of the audible warning 60.

Before using apparatus according to the invention to test a suspect supply of gas, it is advisable first to check the supply with a filter. If contaminant in the gas supply should be all of appreciably greater particle size than 10 micrometre, the apparatus would not register the contamination, but falsely indicate a clear gas supply. The filter used for the purpose mentioned may be of conventional construction, preferably having a filter element on which any deposit of contaminant may readily be observed and evaluated quantitatively.

CLAIMS

1. A method of detecting the presence of a contaminant in a gaseous carrier characterised in that, it includes the steps of allowing oscillations from a first crystal oscillator (12) to produce a beat frequency with oscillations from a second crystal oscillator (14) exposed to substantially the same environmental conditions affecting its stability as said first crystal, except that said second crystal oscillator (14) is not exposed to contaminant; comparing a first value proportional to said beat frequency with a first predetermined value to determine whether the first crystal oscillator (12) is initially operating within the linear portion of its mass/frequency characteristic; feeding carrier gas to said crystals so that any contaminant in said gas can act upon said first crystal oscillator (12) to change the effective mass thereof; and comparing a second value proportional to the beat frequency between said oscillators (12, 14) with a second predetermined value to indicate any change in mass of said first crystal oscillator (12) due to action thereon of contaminant.

2. Apparatus for detecting the presence of a contaminant in a gaseous carrier characterised by a first piezo electric crystal oscillator (12); carrier gas feed measn (10) enabling contaminant in said gas to act upon said first crystal (12) to change the effective mass thereof; a second piezo electric oscillator (14) arranged so that the second crystal (14) is exposed to substantially the same environmental conditions affecting its stability as said first crystal (12), except that shielding means (22) are provided so that the second crystal (14) is not exposed to contaminant; beat detecting means (30) to detect a beat frequency between the first frequency of the first oscillator (12) and the second frequency of the second oscillator (14); timing and switching means (40) arranged to transmit first and second values proportional to the beat frequency to comparator means (48) to compare said values respectively with first and second predetermined values, whereby comparison between said first values indicates whether the said first crystal (12) is initally operating within the linear portion of its mass/frequency characteristic, and comparison between said second values indicates any change in mass of said first crystal (12) due to action thereon of contaminant.

3. Apparatus according to claim 2 characterised in that the timing and switching means (40) is arranged to give a signal, after transmission of said first value, to commence feed of carrier gas through said carrier gas feed means (10), and after a predetermined time interval, and before transmission of said second value, a signal to stop feed of carrier gas through said carrier gas feed means (10). .

4. Apparatus according to claim 3 characterised in that said signals to commence and to stop feed of carrier gas are audible and/or visible signals.

5. Apparatus according to claim 3 characterised in that said signals to commence and to stop feed of carrier gas are arranged to operate a carrier gas feed valve automatically.

6. Apparatus according to any one of claims 3, 4 and 5 characterised in that the predetermined time interval is arranged to be dependent on the pressure of the carrier gas.

7. Apparatus according to claim 6 characterised in that the time interval is selectable manually in relation to said pressure.

8. Apparatus according to any one of the preceding claims characterised in that it includes a frequency to voltage converting means (32) to produce an output voltage value proportional to the beat frequency output of said beat detecting means (30).

Fig.1.

Fig.2.